# EUROPEAN PATENT APPLICATION

(11) **EP 4 559 679 A1**
(43) Date of publication of application: **28.05.2025**
(21) Application number: 23211446.2
(22) Date of filing: 22.11.2023
(51) Int. Cl.: B33Y 30/00

(54) **A THREE-DIMENSIONAL PRINTING DEVICE**

(71) Applicant: Insolution Group B.V., 7442 DR Nijverdal (NL)
(72) Inventor: Saad, Faris, Alphen aan den Rijn (NL); Hendriks, Rob, Apeldoorn (NL); Bouwhuis, Frederik Herbert, Den Ham (NL)
(74) Representative: Arnold & Siedsma

(57) **Abstract**

A three-dimensional printing device for printing one or more three-dimensional products. The 3D printing device comprises a print surface configured to support the printing of the one or more 3D products, a frame arranged at a distance above the print surface, wherein the frame is oriented in a first plane substantially parallel to the print surface, a printing head comprising a printing nozzle configured for dosing the build material on the print surface or on a previous layer in a dosing direction to print the one or more 3D products in a series of layers, wherein the printing nozzle is arranged to extend at an acute internal angle measured between the print surface and the dosing direction, and wherein the printing head is movably coupled to the frame such that the printing head is movable along the first plane with respect to the print surface and wherein the print head is movable in a vertical direction with respect to the print surface, a controller configured to control a movement of the printing head along the first plane and/or in the vertical direction.

## Description

### Field of Invention

The present invention relates to a three-dimensional, 3D, printing device for printing one or more three-dimensional products, such as an insole, from a plurality of layers of build material.

### Background

Foot related problems are a common issue worldwide. Structural foot deformities can have serious consequences on daily activities and lifestyle such as exercising, working, and walking due to foot pain. Many foot and toe problems, including hammertoes, blisters, bunions, corns and calluses, claw and mallet toes, ingrown toenails, toenail fungus, and athlete's foot, plantar fasciitis, verrucas caused by a viral infection found on the soles of the feet or between toes, fallen arches cause discomfort to patients. Most of these foot problems can develop from neglect, ill-fitting shoes, or simple wearout.

An insole, otherwise known as a foot orthosis, a removable shoe insert or inner sole accomplishes many purposes, including daily wear comfort, height enhancement, plantar fasciitis treatment, arch support, foot and joint pain relief from arthritis, overuse, injuries, leg length discrepancy, and other causes such as orthopedic correction and athletic performance. Insoles can help to reduce excess stress and pressure that can lead to foot ulcers.

The effectiveness of insoles may vary depending on individual needs and proper fit, so it's important to find the most suitable type of insole for a specific condition or need of the patients.

Recently 3D printing technology has been used to custom produce the insoles without the need to go through the generally used processing steps of creation of the mold, heating the thermoplastic material, and then forming it on or injecting it into the mold. Instead, data defining the shape of the insole is input to the 3D printer to create the insole in the same manner that any 3D-printed product is manufactured. Although the insole created with 3D printing technology remains substantially the same as the insole created by the process for heat forming thermoplastics described in the prior art to produce a hard insert shaped to the foot of the user, there are several disadvantages that can impact patient comfort and the overall procedure.

Typically, 3D printing devices have a non-movable print surface. Therefore, there is a constant need for the supervising of a user of the 3D printing device since a finished 3D product should be first removed from the print surface to begin with the next 3D product. It is labor intensive and time consuming.

NL2018728B1 discloses a gantry-type three dimensional printing apparatus for printing a three dimensional work piece in a layer wise manner using a building material, said apparatus comprising at least: a frame with an XYZ-gantry; a printing head unit coupled to said XYZ-gantry; a building material supply unit for feeding building material to said printing head unit; and a support platform on which said three dimensional work piece is being printed in layers, said support platform being part of said XYZ-gantry and is movable in the Z-direction.

A drawback of the known gantry-type three dimensional printing apparatus for printing a three dimensional work piece in a layer wise manner using a building material is that the movement of the printing head unit in the X-direction and in the Y-direction is limited by a XY-plane formed by a XY-gantry, where the XY-gantry is a part of the XYZ-gantry. This limits the printing head unit movement along the length of the movable support platform. Furthermore, the XY-gantry is not arranged at the distance from the support platform, but one of the ends of the XY-gantry is connected with the support platform, which defines a Z-part of the XYZ-gantry, under an angle. That results in the narrowing of the working space. The narrow working space can restrict the freedom of manipulation of the printing head unit within the working space. That can impact the geometry of the printed 3D product. Besides, the position of the printing head unit within the XY-gantry makes it difficult to physically reach the printing head. This can lead to difficulties in the maintenance process.

### Summary

It is an object of the present invention to provide a three-dimensional, 3D, printing device for printing one or more three-dimensional products, such as an insole, from a plurality of layers of build material in an improved manner. More in particular it is an object to provide a 3D printing device which allows a printing of a 3D product of a complex geometry with greater freedom of manipulation.

According to an aspect a three-dimensional, 3D, printing device for printing one or more three-dimensional products, such as an insole, from a plurality of layers of build material is provided. The 3D printing device comprises a print surface configured to support the printing of the one or more 3D products, a frame arranged at a distance above the print surface, wherein the frame is oriented in a first plane substantially parallel to the print surface, the plane defining two mutually perpendicular movement directions, a printing head comprising a printing nozzle configured for dosing the build material on the print surface or on a previous layer in a dosing direction to print the one or more 3D products in a series of layers, wherein the printing nozzle is arranged to extend at an acute internal angle measured between the print surface and the dosing direction, and wherein the printing head is movably coupled to the frame such that the printing head is movable along the first plane with respect to the print surface and wherein the print head is movable in a vertical direction with respect to the print surface, a controller configured to control a movement of the printing head along the first plane and/or in the vertical direction.

First, the positioning of the frame at a distance above the print surface and the movable connection between the printing head and the frame makes the working space larger. It leads to greater freedom of manipulation of the printing head unit within the working space and enhances the adaptability of the printing process, as compared to the known 3D printing devices.

Second, since the printing head is movable along the first plane and in a vertical direction with respect to the print surface, 3D products having complex and/or interlocking geometries can be manufactured. This is beneficial in the manufacturing of insoles since insoles should meet a specific condition or individual need of the patients.

An additional advantage is based on the insight that by arranging the printing nozzle to extend at an acute internal angle measured between the print surface and the dosing direction the issues of the creation of so called islands which arise with a regular print head are avoided. These islands are artefacts that occur when a traditional fused deposition 3D printers move from one layer to another. In traditional 3D printing, when a new layer is started vertically on top of the previous layer, a drop of build material rather than a wirelike deposition is created at the start. Such a drop is substantially thicker than the wirelike deposition and creates a protruding artefact or island, in the layer. Because the layers are typically stacked and started directly on top of each other, all the artefacts are stacked on top of each other, and in the context of insoles, can cause pain and discomfort when wearing the insole. Mounting the printhead at an acute angle in the 3D printing device introduces a tilted or diagonal orientation for extruding material. In this way build material is printed at an angle and layers can be formed at an angle rather than vertically on top of each other. Printing at an angle improves the 3D printing device's ability to create overhangs without the need for additional support structures. This is because the material is deposited at an angle, allowing it to bridge more effectively between lower and upper layers. Moreover, printing at an angle avoids the creation of stacked artefacts or islands since the drop of build material is situated laterally from the previous artefact rather than vertically on top of the previous artefact. Finally, printing at an angle substantially eliminates the need for layer-by-layer movement, resulting in more efficient and faster printing for certain applications.

Preferably, the print surface is a continuous conveyor belt comprises a first end and a second end, wherein the continuous conveyor belt defines a conveying direction from the first end to the second end, and wherein conveyance of the conveyor belt is controlled by the controller, wherein optionally the conveying direction is substantially parallel to one of the movement directions along the plane. The introduction of a continuous belt increases efficiency and reduced print time. The continuous belt in combination with the print head arranged at an acute angle allows to print 3D products with theoretical infinite length along the conveying direction. Put differently, long elongate 3D products can efficiently, and in a short amount of time, be printed.

Preferably, the continuous conveyor belt is configured to convey during the dosing of the material or intermittently during the dosing of the material. The movement of the conveyor belt during material dosing allows to create an uninterrupted printing process. The movement of the conveyor belt can further improve the time efficiency.

Preferably, the controller is configured to control the conveying of the one or more 3D products based on the dosing of the build material by causing the conveyor belt to move. In this way the 3D printing device more accurately synchronizes the dosing of the print material and the conveyor belt movement.

Preferably, the controller is configured to move the conveyor belt per N layers, wherein N is 1 or more.

Preferably, the controller is configured to operate in at least one of a print mode and a maintenance mode, wherein in the print mode the controller is configured to control the printing of the one or more 3D products, and wherein in the maintenance mode the controller is configured to move the printing head towards the first end of the continuous conveyor belt, in particular on an edge of the first end, more in particular beyond the first end. Such a dual-mode significantly enhances user convenience by providing distinct functionalities for both normal printing operations and maintenance tasks. Users can transition between modes, simplifying the overall operation of the 3D printing device. By allowing movement beyond the first end of the continuous conveyor belt, the controller readily accommodates a wide range of maintenance operations. This includes tasks that necessitate physical access to the printhead, ensuring versatility and adaptability in the maintenance process.

Preferably, the controller is further configured to control the printing head to simultaneously move in the first movement direction and the second movement direction and/or wherein the printing head is further configured to simultaneously move in the first movement direction and the vertical direction; and/or wherein the printing head is further configured to simultaneously move in the second movement direction and the third movement direction.

Preferably, the device further comprises a cleaning device, such as a brush, arranged transversally of the printing surface as seen in the conveying direction. In this way the cleaning device is readily available close to the printing surface, in particular because the conveyor belt is typically less wide than its length. The transversally arranged cleaning device simplifies regular maintenance operations by providing an automated mechanism for keeping the printing head clean. This reduces the frequency and complexity of manual cleaning procedures.

Preferably, the printing head and the print surface are both configured to move independently of each other with respect to the frame. The independent movement of the printing head and the print surface provides a high degree of operational flexibility in the printing process. Each component can move autonomously, allowing for more intricate and customizable printing patterns. With the ability to move independently, both the printing head and the print surface can be precisely controlled. This enhances printing precision, resulting in higher-quality and more accurate 3D prints.

Preferably, the acute internal angle measured between the print surface and the dosing direction is smaller than 90°, preferably smaller than 50°, more preferably the acute internal angle lies between 40° and 50°, for example 45°.

Preferably, the printing nozzle comprises a conical outlet, wherein an angle between a side wall of the outlet and a center line of the conical outlet is an acute, non-zero, angle. The conical outlet with an acute angle provides precise control over the extrusion of the printing material. This allows for accurate and controlled deposition of material onto the print surface or previous layers. The conical shape with a non-zero angle also helps in reducing material stringing. The controlled flow of material from the nozzle minimizes the likelihood of unwanted strings or wisps of material between different sections of the printed object. The acute angle of the conical outlet contributes to improved detail resolution in the printed object. It allows for finer and more intricate details to be reproduced with greater accuracy. The acute angle of the conical outlet is smaller than the acute internal angle measured between the print surface and the dosing direction. Preferably, the angle is smaller than 45°, preferably smaller than 40°. The acute angle of the conical outlet is for example 35°. The nozzles can comprise a screw portion to fixedly screw the nozzle into the print head. In order to be able to rigidly grip the nozzle during the fixation of the nozzle in the print head a hexagonal portion can be provided which allows the nozzle to be gripped by a wrench. In such a case it is further preferred that an angle measure between the outer most edge of the hexagonal portion, the tip of the nozzle and an axis of the dosing channel of the nozzle is smaller than 45°, for example 41 °. Preferably, a height of the conical outlet, measured between an apex and a base of the conical outlet, is at least two time larger than a radius of the base.

Preferably, the controller is configured to start printing each of the series of layers on the printing surface.

Preferably, the controller is configured to remove the one or more 3D products from the printing surface upon completion of the one or more 3D products by controlling the conveyor belt. The controller's ability to control the conveyor belt for removing completed 3D products introduces an automated ejection process. This eliminates the need for manual intervention in product removal, streamlining the overall printing workflow. Automated removal of completed products minimizes the downtime between successive prints. As soon as one print job is completed, the conveyor belt can swiftly advance, making the printing surface available for the next job without delay. The automated ejection process contributes to increased efficiency and productivity. The printer can operate continuously, producing a series of 3D products with minimal interruptions for manual handling.

Preferably, the device further comprises a scraper arranged at the second end of the conveyor belt, wherein the scraper is arranged to extend at an acute internal angle measured between the print surface and the scraper, and wherein an edge of the scraper is arranged near or against the conveyor belt surface such that the scraper scrapes the one or more 3D products from the conveyor belt surface. The scraper, positioned at the second end of the conveyor belt, facilitates the efficient removal of completed 3D products from the surface. Its placement allows for a systematic scraping action that aids in separating the products from the conveyor belt. The scraper, when arranged to extend at an acute internal angle measured between the print surface and the scraper, ensures that residual material or filament attached to the conveyor belt is effectively removed. This minimizes the risk of any material remnants affecting subsequent prints. By scraping near or against the conveyor belt surface, the scraper contributes to maintaining a clean print surface. This is beneficial for achieving consistent print quality, as residual material on the print surface could impact adhesion and layer consistency. The scraper's automated action reduces the need for manual intervention in the product removal process. Operators can focus on other aspects of the printing workflow, contributing to a more streamlined and hands-free operation.

Preferably, the scraper comprises one or more springs for pre-tensioning of the scraper against the continuous conveyor belt. The presence of springs enables consistent and controlled pressure application of the scraper against the continuous conveyor belt. This ensures a reliable and uniform scraping action, enhancing the efficiency of product removal. The springs allow for adaptability to variations in the conveyor belt's tension or surface irregularities. They can compensate for minor fluctuations, maintaining optimal contact between the scraper and the conveyor belt for effective cleaning. The pre-tensioning provided by the springs enhances the effectiveness of the scraping action. This ensures that the scraper makes robust contact with the conveyor belt surface, thoroughly removing any residual material or completed 3D products. The controlled pre-tensioning helps distribute the forces evenly on the scraper, contributing to its durability. This can lead to an extended lifespan for the scraper, reducing the need for frequent replacements and maintenance.

Preferably, the device further comprises one or more sensors, wherein the one or more sensors is configured to compare the one or more 3D product with a predetermined threshold.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
figure 1 shows a side view of a device according to an exemplary embodiment;
figure 2 shows a perspective view of a device according to an exemplary embodiment; and
figure 3 shows a side view of a device according to an exemplary embodiment.

In the drawings the same reference number has been allocated to a same or analogous element.

### Description of drawings

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

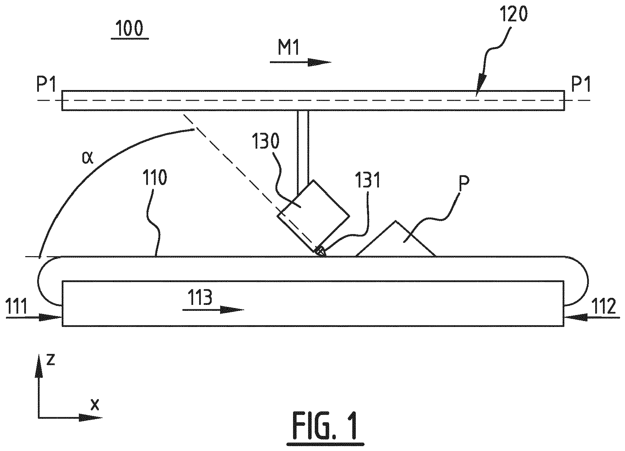

Figure 1 shows a side view of a 3D printing device 100 for printing one or more three-dimensional products P from a plurality of layers of build material according to an exemplary embodiment of the invention. In the context of the 3D printing device 100, the term 3D product encompasses a broad spectrum of items that can be produced through layer-by-layer additive manufacturing. It is however preferred that the 3D product is an insole. Insoles, being customizable and intricately shaped, benefit significantly from the layer-wise precision that 3D printing affords. The 3D printing device 100 allows for the creation of insoles tailored to the individual contours of a user's feet, offering enhanced comfort and support.

The 3D printing device 100 comprises a print surface 110 configured to support the printing of the one or more 3D products P. The print surface 110 is a base upon which the additive manufacturing process takes place. In other words, the print surface 110 forms the baseline for layers to be added. The choice of materials for the print surface 110 influence factors such as adhesion characteristics, thermal conductivity, and durability. These considerations directly impact the quality of the final 3D products, ensuring that they adhere securely to the print surface during the printing process. Polyetherimide is an example of a material suitable for a print surface 110 due to its excellent adhesion properties, even heating, and the ability to work well with different filament materials. Another example is stainless steel, compared to polyetherimide, stainless steel is more durable and holds its shape in an improved manner. It is also known for its durability and resistance to high temperatures. As will be elaborated here below, it is preferred that the print surface 110 is a conveyor belt.

Above the print surface 110 is arranged a frame 120 at a distance from the print surface 110. The frame 120 is oriented in a first plane P1 substantially parallel to the print surface 110. The plane P1 defining two mutually perpendicular movement directions M1 and M2. The arrangement of the frame 120 above the print surface at a distance introduces a structural element for the precision and control of the additive manufacturing process. This frame, denoted as 120, is positioned to create a spatial relationship with the print surface 110. Notably, the frame 120 is oriented in a first plane, denoted as P1, which is substantially parallel to the print surface 110. The orientation of the frame 120 in a plane parallel to the print surface 110 defines two mutually perpendicular movement directions, denoted as M1 and M2. This movement occurs in the two defined directions, M1 and M2, which are intrinsic to the orientation of the frame. The parallel alignment of the frame 120 and print surface 110 establishes a coordinated system where the printing head 130 can navigate precisely, contributing to the accuracy of the 3D prints. The freedom of movement along the first plane P1 opens up possibilities for intricate and complex printing patterns, allowing the 3D printing device 100 to produce objects with a high degree of customization. This structural arrangement ensures that the printing head 130 can traverse the print surface seamlessly, adhering to the defined movement directions and executing the layer-wise deposition with precision. The distance between the frame 120 and the print surface 110 is preferably determined to accommodate the specific requirements of the printing process. The spatial relationship ensures that the frame 120 does not interfere with the printing head's 130 movements but rather acts as a supportive structure, providing stability and guidance.

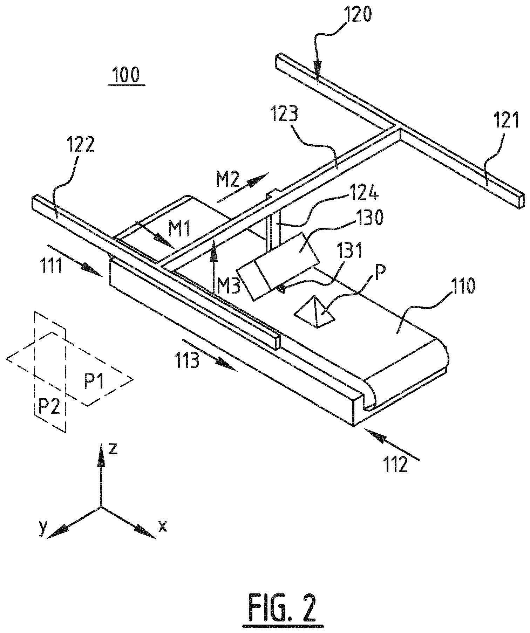

To assist in the description of the components of the 3D printing device 100, a coordinate system has been provided. Figure 1 illustrates a longitudinal axis x and an upright axis z in relation to the 3D printing device 100. The longitudinal axis x extends in a direction generally parallel to a longitudinal axis of the print surface 110 and to the plane P1. The longitudinal axis x can also be called a first axis. The upright axis z extends perpendicularly to the longitudinal axis x and can as be referred to as the vertical axis or second axis. A movement along the second axis z is defined as an upright or down motion. A third axis y is shown in figure 2. The third axis y, also called the lateral axis extends perpendicular to the longitudinal axis and the upright axis.

The 3D printing device 100 further comprises a printing head 130 with a printing nozzle 131. The printing head 130 is configured for dosing the build material through the printing nozzle 131 on the print surface 110 or on a previous layer in a dosing direction to print the one or more 3D products P in a series of layers. The printing nozzle 131 extends at an acute internal angle α measured between the print surface 110 and the dosing direction. This printing head is configured to perform the task of dosing the build material onto the print surface 110 or onto a previously deposited layer, thereby facilitating the layer-wise construction of the one or more 3D products denoted as P. The printing head's 130 purpose is to precisely control the deposition of the build material, shaping each layer with accuracy to contribute to the formation of the final 3D products. The configuration of the printing nozzle 131 extends at an acute internal angle α, measured between the print surface 110 and the dosing direction. Preferably, the acute internal angle α measured between the print surface 110 and the dosing direction is smaller than 90°, preferably smaller than 50°, more preferably the acute internal angle α lies between 40° and 50°, such as around 45°. In other words, the acute internal angle is a non-zero angle. Preferably, the printing nozzle 131 comprises a conical outlet, wherein an angle P between a side wall of the outlet and a center line of the conical outlet is an acute, non-zero, angle. The conical outlet with an acute angle provides precise control over the extrusion of the printing material. This allows for accurate and controlled deposition of material onto the print surface or previous layers. The conical shape with a non-zero angle also helps in reducing material stringing. The controlled flow of material from the nozzle minimizes the likelihood of unwanted strings or wisps of material between different sections of the printed object. The acute angle of the conical outlet contributes to improved detail resolution in the printed object. It allows for finer and more intricate details to be reproduced with greater accuracy. In particular, the angle β is smaller than 45°, preferably smaller then 40°. The acute angle of the conical outlet is for example 35°. Preferably, a height of the conical outlet, measured between an apex and a base of the conical outlet, is at least two time larger than a radius of the base. The nozzles can comprise a screw portion to fixedly screw the nozzle into the print head. In order to be able to rigidly grip the nozzle during the fixation of the nozzle in the print head a hexagonal portion can be provided which allows the nozzle to be gripped by a wrench. In such a case it is further preferred that an angle measure between the outer most edge of the hexagonal portion, the tip of the nozzle and an axis of the dosing channel of the nozzle is smaller than 45°, for example 41°.

The printing head 130 is movably coupled to the frame 120 such that the printing head is movable. The printing head 130 is movable in three directions M1, M2, M3. The first and second directions M1 and M2 are in line with the first plane P1. Put differently, the first and second direction are along the longitudinal x and lateral axis z. The third direction M3 is in a vertical direction with respect to the print surface 110. Put differently, the third direction is along the upright axis z.

The 3D printing device 100 further comprises a controller (not shown) configured to control a movement of the printing head 130 along the first plane P1 and/or in the vertical direction M3. The controller is referred to as a single entity. However the controller can comprise one or more subcontrollers. In this way the controller forms a system of subcontrollers. Each of one of more subcontrollers can be respectably configured to perform a certain task, for example, control the movement of the printing head 130 in at least one movement direction M1, M2 or M3.

Figure 2 shows a perspective view of the exemplary embodiment of the 3D printing device 100 of figure 1. In the exemplary embodiment shown in figure 2 the print surface 110 of the 3D printing device 100 a continuous conveyor belt 110. The continuous conveyor belt comprises a first end 111 and a second end 112. The first and second end 111, 112 are also shown in figure 1. The one or more 3D products P can be transported on the continuous conveyor belt in a conveying direction 113. The conveying direction is from the first end 111 to the second end 112. The conveying direction 113 is optionally substantially parallel to one of the first and second movement directions M1, M2 of the printing head 130 along the plane P1. In figure 2 the first direction M1 lies in line with the conveying direction, and the second direction Preferably, the dosing direction corresponds to the conveying direction 113. The conveyance of the conveyor belt can be controlled by the controller, preferably, by one or more subcontrollers. The conveyor belt increases efficiency and reduces print time. Moreover, when the continuous belt 110 is used in combination with the print head 130 arranged at an acute angle, this allows to print 3D products with theoretical infinite length along the conveying direction. Put differently, long elongate 3D products such as insoles, can efficiently, and in a short amount of time, be printed. It will be clear that the conveyor belt 110 can move independently from and in a coordinated manner with the print head 130. For example, the conveyor belt can run from its first end to its second end, thereby moving 3D printed products in the conveying direction. The conveying direction is, in figure 2, in line with the first movement direction M1 of the print head 130. The print head 130 can move simultaneously or separately with respect to the conveyor belt, or more generically, with respect to the print surface. For example, when the conveyor belt is in standstill, the print head 130 can move along the first movement direction M1, the second movement direction M2 and/or the third movement direction M3. The printing head 130 can simultaneously move in the first movement direction M1 and the second movement direction M2. The printing head 130 can also simultaneously move in the first movement direction and the third movement direction, i.e. the vertical direction. The printing head 130 is further configured to simultaneously move in the second movement direction M2 and the third movement direction M3. It will be clear that any combination of movement directions is possible. This movement can be enabled in a plurality of ways. In figure 2, the frame 120 comprises a first frame element 121, a second frame element 122, and a third frame element 123. The third frame element 123 is movably connected with the first frame element 121 and the second frame element 122. If the connection between the first and the third element is sufficiently strong, the second frame element can be omitted. The first frame element 121 is oriented along the longitudinal axis x. The second frame element 122 is arranged parallel to the first frame element 121, and the third frame element 123 extends between the first and second frame element. It is preferred that the third frame element extends in the lateral direction y of the frame 120. In order for the printing head 130 to move in at least the first movement direction M1, the third frame element 123 is movable along the first frame element. In order for the print head 130 to be able to move in the second direction, the print head is movably coupled to the third frame element 130. Finally in order to move in the third direction M3, the print head 130 is movable with respect to a fourth frame element 124. In this case the fourth element 124 is movably coupled to the third frame element 123. Preferably, the controller (not shown) is configured to operate in at least one of a print mode and a maintenance mode. In the print mode the controller (not shown) is configured to control the printing of the one or more 3D products P. In the maintenance mode the controller (not shown) is configured to move the printing head 130 towards the first end 111 of the continuous conveyor belt, in particular on an edge of the first end 111, more in particular beyond the first end 111, where the maintenance of the printing head 130 can be done. In such an embodiment it is preferred that the first frame element 121 extends beyond the first end 111. It will be clear that a similar effect can be reached by moving the print head to the second end of the conveyor belt.

The continuous conveyor belt 110 can also be configured to convey during the dosing of the build material or intermittently during the dosing of the build material, i.e. when the print head is moving in any one of the first, second or third movement direction. In this case it is preferred that the controller is configured to control the conveying of one or more 3D products P based on the dosing of the build material by causing the conveyor belt to move. Preferably, the controller is configured to move the conveyor belt per N layers, wherein N is 1 or more.

In order to easily clean the print head 130, the 3D printing device 100 further comprises a cleaning device (not shown), such as a brush, arranged transversally of the printing surface 110 as seen in the conveying direction 113. In other words, the cleaning device is arranged adjacent to the printing surface 110, preferably laterally adjacent such that a travel distance between the printing surface is small. Preferably, in the maintenance mode the controller (not shown) moves the printing head 130 beyond the first end 111, where the printing nozzle 131 of the printing head 130 can be cleaned by the brush.

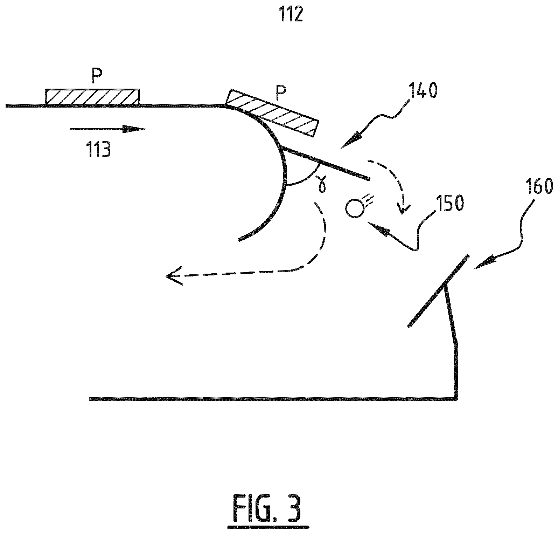

Figure 3 shows a side view of a 3D printing device 100 for printing one or more 3D products, such as an insole, from a plurality of layers of build material according to an embodiment of the present disclosure shown on figure 1 and figure 2.

The 3D printing device 100 further comprises a scraper 140 arranged at the second end of the conveyor belt, wherein the scraper 140 is arranged to extend at an acute internal angle γ measured between the print surface 110 and the scraper, and wherein an edge of the scraper is arranged near or against the conveyor belt surface such that the scraper scrapes the one or more 3D products P from the conveyor belt surface. In this way the device 100 facilitates the efficient removal of completed 3D products from the surface 110. By scraping near or against the conveyor belt surface, the scraper 140 also contributes to maintaining a clean print surface. This is beneficial for achieving consistent print quality, as residual material on the print surface could impact adhesion and layer consistency. In order to pre-tension the scraper one or more springs (not shown) for pre-tensioning of the scraper against the continuous conveyor belt can be provided. Preferably, the 3D printing device 100 further comprises one or more sensors 150, wherein the one or more sensors is configured to compare the one or more 3D product P with a predetermined threshold. In case the one or more 3D product P differs from the predetermined threshold, the 3D printing device 100 is configured to cast it away.

In order to capture the finished 3D products a receptacle 160 can be provided. The receptacle is preferably provided with a biasing means which pushes the 3D products falling from the belt in the receptacle.

It should be noted that the above-mentioned exemplary embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.
Whilst the principles of the present invention have been set out above in connection with specific embodiments, it is to be understood that this description is merely made by way of example and not as a limitation of the scope of protection which is determined by the appended claims.

## Claims

1. A three-dimensional, 3D, printing device (100) for printing one or more three-dimensional products (P), such as an insole, from a plurality of layers of build material, the device (100) comprising:
- a print surface (110) configured to support the printing of the one or more 3D products (P);
- a frame (120) arranged at a distance above the print surface (110), wherein the frame is oriented in a first plane (P1) substantially parallel to the print surface (110), the plane (P1) defining two mutually perpendicular movement directions (M1, M2);
- a printing head (130) comprising a printing nozzle (131) configured for dosing the build material on the print surface (110) or on a previous layer in a dosing direction to print the one or more 3D products (P) in a series of layers, wherein the printing nozzle (131) is arranged to extend at an acute internal angle (α) measured between the print surface (110) and the dosing direction, and wherein the printing head (130) is movably coupled to the frame (120) such that the printing head (130) is movable along the first plane (P1) with respect to the print surface (110) and wherein the print head is movable in a vertical direction (M3) with respect to the print surface (110);
- a controller configured to control a movement of the printing head (130) along the first plane (P 1) and/or in the vertical direction (M3).

2. The device (100) according to claim 1, wherein the print surface (110) is a continuous conveyor belt comprising a first end (111) and a second end (112), wherein the continuous conveyor belt defines a conveying direction (113) from the first end to the second end, and wherein conveyance of the conveyor belt is controlled by the controller, wherein optionally the conveying direction is substantially parallel to one of the movement directions (M1, M2) along the plane (P1).

3. The device (100) according to claim 2, wherein the continuous conveyor belt is configured to convey during the dosing of the material or intermittently during the dosing of the material.

4. The device (100) according to any one of claims 2-3, wherein the controller is configured to control the conveying of the one or more 3D products (P) based on the dosing of the build material by causing the conveyor belt to move.

5. The device (100) according to the previous claim, wherein the controller is configured to move the conveyor belt per N layers, wherein N is 1 or more.

6. The device (100) according to any one of claims 2-5, wherein the controller is configured to operate in at least one of a print mode and a maintenance mode, wherein in the print mode the controller is configured to control the printing of the one or more 3D products, and wherein in the maintenance mode the controller is configured to move the printing head towards the first end of the continuous conveyor belt, in particular on an edge of the first end, more in particular beyond the first end.

7. The device (100) according to any one of claims 2-7, wherein the controller is further configured to control the printing head to simultaneously move in the first movement direction (M1) and the second movement direction (M2) and/or wherein the printing head is further configured to simultaneously move in the first movement direction (M1) and the vertical direction (M3); and/or wherein the printing head is further configured to simultaneously move in the second movement direction (M2) and the third movement direction (M3).

8. The device (100) according to any one of claims 2-8, further comprising a cleaning device, such as a brush, arranged transversally of the printing surface as seen in the conveying direction (113).

9. The device (100) according to any one of the previous claims, wherein the printing head and the print surface (110) are both configured to move independently of each other with respect to the frame.

10. The device (100) according to any one of the previous claims, wherein the acute internal angle (α) measured between the print surface (110) and the dosing direction is smaller than 90°, preferably smaller than 50°, more preferably the acute internal angle lies between 40° and 50°, such as around 45°.

11. The device (100) according to any one of the previous claims, wherein the printing nozzle comprises a conical outlet, wherein an angle (β) between a side wall of the outlet and a center line of the conical outlet is an acute, non-zero, angle, preferably the angle (β) is smaller than 45°, preferably smaller than 40°; and/or wherein a height of the conical outlet, measured between an apex and a base of the conical outlet, is at least two time larger than a radius of the base.

12. The device (100) according to any of the previous claims, wherein the controller is configured to start printing each of the series of layers on the printing surface.

13. The device (100) according to any of the previous claims, amongst which at least claim 2, wherein the controller is configured to remove the one or more 3D products from the printing surface upon completion of the one or more 3D products by controlling the conveyor belt.

14. The device (100) according to any of the previous claims, further comprising a scraper arranged at the second end of the conveyor belt, wherein the scraper is arranged to extend at an acute internal angle (γ) measured between the print surface (110) and the scraper, and wherein an edge of the scraper is arranged near or against the conveyor belt surface such that the scraper scrapes the one or more 3D products from the conveyor belt surface, wherein the scraper preferably comprises one or more springs for pre-tensioning of the scraper against the continuous conveyor belt.

15. The device (100) according to any of the previous claims, wherein the device (100) further comprises one or more sensors, wherein the one or more sensors is configured to compare the one or more 3D product with a predetermined threshold.
